# EUROPEAN PATENT APPLICATION

(11) **EP 2 684 691 A1**
(43) Date of publication of application: **15.01.2014**
(21) Application number: 13186573.5
(22) Date of filing: 23.10.2008
(51) Int. Cl.: B32B 27/16, C08K 3/22, C09K 5/14, B32B 37/06

(54) **Tungsten oxides as ir absorbers for nir curing, laser welding etc.**

(30) Priority: 05.11.2007 EP 07119940
(62) Divisional of application: 08847913.4
(71) Applicant: BASF SE, 67056 Ludwigshafen (DE)
(72) Inventor: Lehmann, Urs, 4057 Basel (CH); Stadler, Urs Leo, Madison, NJ 07940 (US); Mamak, Marc, Mason, OH 45040 (US); Knischka, Ralf, 79541 Lörrach (DE)

(57) **Abstract**

The invention relates to the use of tungsten oxide or of tungstate to increase the heat-input amount of near infrared radiation in processes selected from laser welding of plastics, NIR curing of coatings, drying of printing inks, fixing of ink toners to a substrate, heating of plastic preforms, laser marking of plastics or paper.

## Description

The invention relates to the use of tungsten oxide or of tungstate to increase the heat-input amount of near infrared radiation.

In principle the IR absorbing properties of tungsten sub-oxides and tungsten bronzes are known. EP 1 847 635 discloses, for example a particle dispersion of Cs₀₃₃WO₃ as heat absorbing material.

It was found that these materials exhibit a distinct higher effect than other known IR-absorbers although absorbing the same amount of energy. This is very surprising and cannot be explained so far. Tungsten bronzes e.g. incorporated in coatings led to a much higher temperature increase upon irradiation with IR than expected according to its spectral absorption capacity. The temperature increase measured was distinctly higher than found with other known IR absorbers and reached almost the temperature observed with carbon black. Or for laser marking of paper tungsten bronzes or sub-oxides proved to be more than 10 times more efficient as lanthanum hexaboride, a well known almost colorless IR absorber. This is in fact very surprising and the reason for is not known.

Many technical processes (like laser welding and marking of plastics, NIR curing and drying of coatings, drying of printings, laser marking of paper, curing and drying of adhesives, fixing of ink toners to a substrate, heating of plastic pre-forms etc.) require an efficient, quick and focused local heat-input through IR radiation. The conversion of IR radiation into heat is realized by placing appropriate IR absorbers at the place where the heat is required. Carbon black is a well known efficient IR absorber for such processes. But carbon black has one big draw back: that's its strong black colour. Thus carbon black cannot be applied for coloured (other than black or grey), uncoloured, white or transparent systems. For such systems a "white or colourless carbon black" is a great technical need.

Accordingly the target was to find such a "colourless and transparent carbon black".

Very surprisingly the tungsten oxide material of the present invention comes quite near to this target profile - although it is slightly bluish to grayish.

But due to its surprisingly high efficiency of conversion of IR radiation into heat, this tungsten oxide material can be applied at such a low concentrations that its own colour is acceptable for most applications.

The same is true for transparency: the material (plastics, coatings) containing this tungsten oxide remains also highly transparent.

Tungsten oxides and tungstates are known as infrared shielding material. The publications EP 1 676 890 and US 2007/0187653 (Sumitomo Metal Mining Company) disclose an infrared shielding nanoparticle dispersion comprising tungsten trioxide having reduced oxygen.

Thus, the invention relates to the use of tungsten oxide of the formula **W03-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of NIR curing of coatings and NIR drying of coatings.

The heat-input amount is the thermal energy supplied by near infrared radiation and corresponds to the temperature reached after NIR-curing and drying of coatings.

Preferably y is 1. Examples are: H_{0.53}WO₃ Na_{0.33}WO₃, K_{0.33}WO₃, Cs_{0.33}WO₃, Ba_{0.33}WO₃, Rb_{0.33}WO₃

Preferred is the use of tungsten suboxides (e.g. WO_{2,7}), and tungsten bronzes (e.g. H_{0.53}WO₃ Na_{0.33}WO₃,_{,} CS_{0.33}WO₃). Especially preferred are Cs_{0.2-0.5}WO₃.

The tungsten bronzes can be prepared according to EP 1676890, wherein it is said that tungsten bronzes as expressed by the formula MₓWO₃ can be prepared by heating an aqueous solution of ammonium meta tungstate with metal salts to about 300-700°C and drying the aqueous mixture to obtain a solid product.

Tungsten oxides powders, (e.g. WO_{2.7}) are commercially available e.g. from Osram Sylvania. WO_{2,7} may also be prepared by reducing ammonium tungstate in a plasma reactor. The commercially available WO_{2,7} may be dispersed and then this dispersion is milled e.g. in a ***Dynomill*** mill with 0.4-µm zirconium balls to obtain particles having a particle size between 10 nm and 1µm, preferably between 10nm and 500nm, more preferably between 10nm and 200nm.

The amount of tungsten oxide or of tungstate applied is between 0.01 and 2.0wt%. In this amount the slight blue color of tungsten oxide is not relevant.

The **NIR radiation** used in the process according to the invention is short-wave infrared radiation in the wavelength range from about 700 nm to about 3000 nm. Radiation sources for NIR radiation include, for example, conventional NIR radiation emitters, which are available commercially (for example, from Adphos) with the main emission in the range from 800 to 1500 nm, diode lasers, fibre lasers or a Nd:YAG laser.

The NIR curing of coatings can be used for all type of coatings including both pigmented and unpigmented coating materials. Depending upon the nature of the organic binder, coatings may comprise solvent and/or water or may be solventless or water-free. They may also comprise fillers and other additives in addition to the pigments. Any kind of coating is suitable in the method according to the invention, for example, powder coatings, clearcoats, high-solids coatings, effect coatings, high-gloss coatings, silk-finish coatings, matt-finish coatings, spray coatings, dip-coatings, pour-coatings etc.. Corresponding raw materials and compositions are known to the person skilled in the art and are described, for example, in "Lehrbuch der Lacktechnologie", Vincentz Verlag, 1998.

NIR Curing of coatings is state of the art in the field of coil coatings. As coating formulations per se do not absorb NIR-radiation, the heating rate of the coating during drying and /or curing is therefore strongly dependent from several factors:
- substrate
- pigmentation degree
- pigment chemistry

This leads to draw backs in certain coating processes. These are:
a) low energy efficiency due to loss of NIR radiation
b) different curing speeds of e.g. a black (FW 200) pigmented against a white (TiO2) pigmented system.
c) NIR-drying can't be used for clearcoat applications
d) Especially white RAL shades as 9002, 9010 & 9016 show low energy efficiencies during NIR curing.

In pigmented coatings, especially in TiO2 pigmented systems it is important that the addition of NIR-Absorbers do not cause any discoloration. Thus, one aspect of the invention is the use in pigmented coatings.

There is therefore a need for near infrared absorbers that are colorless as well as transparent to overcome the draw backs a-d. State of the art materials are either colored (Lumogen IR 765, 788) or show a strong haze (Minatec 230 A-IR, Lazerflair 825, LaB₆) when incorporated into a coating formulation. Thus, an additional requirement for the IR absorber used is to avoid haze.

Minatec 230 A-IR consists of a specific antimony tin composition (Merck), Lazerflair 825 is a mica based platelet type pigment (Merck) and Lumogen IR 765 and IR 788 are organic quaterrylene-bisimides (BASF). LaB₆ can be purchased from Aldrich..

The temperature reached after NIR curing is nearly the same using the above referenced tungsten oxides and tungstates or using carbon black. This unexpected effect of the extremely high temperatures that can be reached using the above referenced tungsten oxides and tungstates can't be explained only with the high near infrared absorption. Materials or concentrations having a higher absorption integral in the near infrared are showing lower temperature increases after a NIR curing cycle (Example 3.1).

### Example 1 (Preparation of WO_{2.7} by milling)

240ml of 0.4- µm zirconium balls are added to a suspension of 106.5 g WO_{2.7} from Osram/ Sylvania in 450 ml water. The suspension is milled in a Dynomill for 8h at 4500 r/min. The suspension obtained is filtered off and dried. Particle size is mainly between 30 and 100 nm.

**Example 2** (Preparation of a hydrogen tungsten bronze (H_{0.53}WO₃) using a plasma reactor) Ammonium paratungstate powder ((NH₄)₁₀W₁₂H₂₀O₄₂·4H₂O, *Osram Sylvania*) was entrained into an argon carrier gas by a vibratory-type powder feeder operating at 10 g/min. The fluidized powder was fed into a plasma reactor with a Tekna PL-50 plasma torch operated at a power of 65 kW. The temperature range typically reached in the plasma hot zone of the reactor is between 5000 -10,000 K. A mixture of 140 slpm argon, 0.5 slpm hydrogen, and 5 slpm helium [slpm = standard liters per minute; standard conditions for the calculation of slpm are defined as: Tn 0 °C (32°F), Pn = 1.01 bar (14.72 psi)] was used for the sheath gas. The reactant vapor was cooled by a quench gas and the resulting powder was collected in a bag filter. The resulting hydrogen tungsten bronze powder was analyzed by powder X-ray diffraction, electron microscopy, and UV-vis-NIR spectroscopy.

Particle size is between 30 and 200 nm. This material exhibits very good dispersibility in coatings or plastics etc.

### Example 3.1 (application example NIR curing)

The different NIR-Absorbers were tested in a 2P-PU formulation concerning there temperature uptake during NIR-curing as well as the final coating properties.

The NIR-Absorbers were incorporated into the millbase using glass beads and a scandex shaker for 16 h according to the following table (values are in g).

| **Millbase** | |
|---|---|
| Laropal A 81 (urea-aldehyde resin available from BASF) 60% in 1-methoxy-2propylacetate/xylene 3:1 | 15.7 g |
| EFKA 4401 (polymeric dispersant, available from Ciba Inc) | 0.08g |
| 1-methoxy-2propylacetate (solvent) | 4.62g |
| Butylglycolacetate (solvent) | 1.16g |
| NIR-A | 0.19g |

The millbase was mixed with the letdown formulation and the crosslinker was added according to the following table.

| **LET DOWN** | Amount in g |
|---|---|
| Millbase | 21.75 |
| 2p PUR Clearcoat* | 3.84 |
| MPA/BGA (95/5) | 7.61 |
| Desmodur n 3390 (90%), crosslinker, aliphatic isocyanate from Bayer. | 7.50 |

| **2p PUR Clearcoat*** | Amount in g |
|---|---|
| Macrynal SM 510n (hydroxyfunctional acrylic resin available from Cytec Surface Specialties) | 78.7 |
| EFKA 3030 (modified polysiloxane to improve levelling available from Ciba Inc.) | 0.15 |
| Dibutyltin dilaurate 10% in xylene | 0.1 |
| TINUVIN 292/ TINUVIN 99-2 (65/35) | 2.0 |
| DABCO-33LV 10% in xylene | 0.1 |
| 1-methoxy-2-propylacetate | 14.45 |
| butylglycolacetate | 4.5 |

DABCO-33LV is a mixture of triethylenediamine and dipropyleneglycol available from Air Products & Chemicals and used as catalyst

TINUVIN 292 is a hindered amine light stabilizers ("HALS") available from Ciba Inc. TINUVIN 99-2 is an UV absorber available from Ciba Inc.

The coating was applied by a wire bar using a WFT (wet film thickness) of 80 µm. The coatings were dried in an NIR-dryer using different lamp settings (6 Adphos high-burn NIR-lamps, output from 50-100 %) and belt speeds (1 - 4 m/min).

The distribution of the NIR-A into the coating formulation was checked via the measurement of haze over black. The lower the value the better the distribution in the formulation and the less impact on the visual film properties is observed.

| **NIR Absorber** | **WFT (mm)** | **Wt% on solids** | **Haze** |
|---|---|---|---|
| Example 1 | 80 | 1 | 7.1 |
| Example 2 | 80 | 1 | 8.0 |
| LaB₆ | 80 | 1 | 14.3 |
| Minatec 230 A-IR | 80 | 1 | 10.4 |
| Lazerflair 825 | 80 | 1 | 15.7 |

The temperature of the coating surface was measured directly after cure.

The Table below shows the results using a belt speed of 2m/min, a 6 Adphos high-burn NIR-lamps, output 70 %, a distance to the lamp of 100mm

| **NIR absorber** | **Wt% on solid** | **Absorption integral 100 % ref. FW200** | **Temp. after Curing (°C)** |
|---|---|---|---|
| Blanc (no NIR absorber) | - | 0 | 98 |
| Minatec 230 A-IR | 1 | 0.5 | 106 |
| Lazerflair 825 | 1 | n.d. | 112 |
| Lumogen IR 765 | 1 | 6 | 129 |
| Lumogen IR 788 | 1 | 12 | 129 |
| 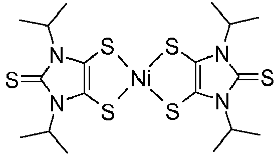 | 1 | 31 | 180 |
| LaB₆ | 1 | 2.5 | 151 |
| H_{0.53} WO₃ (Example 2) | 1 | 27 | 216 |
| H_{0.53} WO₃ (Example 2) | 0.1 | 3 | 136 |
| FW 200 (Carbon black) | 1 | 100 | 232 |

The Table clearly shows that H_{0.53} WO ₃is able to convert NIR radiation into heat to nearly the same extent as carbon black does, 216 °C compared to 232 °C. Thus, the tungsten oxide material of the present invention comes quite close to the target of a "colourless carbon black". Even near infrared absorbers with a higher absorption integral in the NIR range (800-1500 nm) show a significantly lower temperature increase compared to the above referenced tungsten oxides and tungstates. (e. g compared H_{0.53}WO₃ in a concentration of 0.1% with Lumogen)

This can be seen especially in an application with TiO2. (Ex. 3.2)

### Example 3.2 (application example NIR curing)

| **Millbase** | | **Letdown** | |
|---|---|---|---|
| Dynapol® LH 530-02 (60%) (Polyester resin) | 35.00 | Millbase | 78.25 |
| Dowanol® PM (solvent) | 1.00 | Dynapol® LH 530-02 (60%) | 10.82 |
| EFKA® 5010 (50%) (wetting agent) | 1.80 | Cymel® 303 (98%) | 5.75 |
| EFKA® 3772 (60%) (leveling agent) | 1.00 | Solvent Naphta 150 | 0.88 |
| Aerosil® 200 | 0.60 | Dowanol® PM | 1.00 |
| Solvent Naphta 150 | 5.35 | Butylglycoleacetate | 1.10 |
| Estasol® / DBE (Solvent) | 3.00 | Dynapol® Kat. 1203 (50%) | 0.70 |
| 50 % URAD® DD 27 / 50 % Solvent Naphta 150 | 0.50 | Tinuvin® 123 | 1.00 |
| NIR-A / pigments | 30.00 | Tinuvin® 400-2 (85%) | 0.50 |

The millbase was prepared according to a standard process using a dispermat for pre-mixing and additional milling for 1 h using a Disperser DAS 200 from Lau. The coatings were applied onto pre-primed white aluminium panels using a slit coater leading to DFT's of around 80 µm. Formulations with TiO₂ and mixtures of TiO₂ and NIR-A's were tested. Curing was done at different belt speeds using 6 HB-NIR emitters from the company Adphos.

Especially in the field of coil coatings the main usage is in the field of "white" shades e.g. RAL 9001, 9003, 9010, 9016. RAL 9010 being the most critical concerning the efficient absorption of the emitted energy. To test the effect on curing speed by the addition of NIR-A (Example 2) , a 45 w%/w TiO₂ pigmented system was used as reference. The NIR-A can be added either directly in the milling step or alternatively via a resin free pigment paste based on Ciba EFKA® 4310 for solvent based applications. The addition of the NIR-A leads to a strong reduction of the curing time (see Tab. 1). This allows to either increase the belt speed leading to a higher throughput of the coating line or to reduce the lamp output leading to a reduction of electricity costs.

| w%/w TiO2 | w%/w NIR absorber of Ex. 2 | Rel. belt speed to cure in % | Δa variation | Δb variation |
|---|---|---|---|---|
| 45.0 | 0 | 100 | 0 | 0 |
| 44.95 | 0.05 | 250 | -0.4 | -0.8 |
| 44.75 | 0.25 | 350 | -1.2 | -2.8 |
| 44.50 | 0.5 | 450 | -1.6 | -4.2 |

The belt speed to cure was determined via the stability of the cured coating against 100 MEK doublerubs.

The above Table shows that curing can be done by a higher belt speed and that only slight changes in the b as well as a value within the CIE-Lab color space are observed with an increased addition level of NIR-A 1 compared to the TiO₂ pigmented system.

### Example 3.3 (application example NIR curing)

The same formulation was used as in Example 3.2. The formulation with 45 w% TiO₂ on solids was used as reference.

| NIR Absorber | w% on solids | Belt speed to cure [m/min] | ΔE |
|---|---|---|---|
| none | 0 | 0.75 | 0 |
| Minatec 230 A-IR | 1 | 1.00 | 1.9 |
| Example 2 | 0.05 | 1.50 | 1.25 |

The belt speed to cure was determined via the stability of the cured coating against 100 MEK doublerubs.

The above Table shows that the inventive NIR absorber (Ex.2) has a low effect on the discoloration of a TiO₂ pigmented system.

In another embodiment the invention relates to the use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of laser marking of plastics.

Preferred is the use of tungsten suboxides (e.g. WO_{2,72}), and tungsten bronzes (e.g. H_{0.53}WO₃ Na_{0.33}WO₃,_{,} Cs_{0.33}WO₃). Especially preferred are Cs_{0.2-0.5}WO₃.

In another embodiment the invention relates to the use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of laser welding of plastics.

Preferred is the use of tungsten suboxides (e.g. WO_{2,72}), and tungsten bronzes (e.g. H_{0.53}WO₃ Na_{0.33}WO₃,_{,} Cs_{0.33}WO₃). Especially preferred are Cs_{0.2-0.5}WO₃.

Laser radiation is used in welding processes for producing fusion bonded plastics. Typical laser wavelengths used are: 808nm, 850nm, 940nm, 980nm or 1064nm. For the absorption of the laser radiation and its conversion to heat for the melting process, it is necessary to add an IR absorber. A common IR absorber is carbon black. Due to the dark color welding of brightly colored or transparent parts is impossible.

The concentration of the tungsten oxide or of the tungstate is 10-800 ppm, preferably 100-300 ppm.

The tungsten oxide or of the tungstate may be incorporated directly into the plastics parts by known processes like injection molding, extrusion, and the like.

Examples of plastics used in a laser welding process are polypropylene, polyvinylbutyrale, polyamide, polycarbonate, polycarbonate-polyethylene terephthalate-blends, polycarbonate-polybutylene terephthalate-blends, polycarbonate-acrylnitrile/styrene/acrylnitrile-copolymer-blends, polycarbonate-acrylnitrile/butadiene/styrene-copolymer-blends, polymethylmeth-acrylate-acrylnitrile/butadiene/styrene-copolymer-blends (MABS), polyethylene terephthalate, polybutylene terephthalate, polymethylmethacrylate, polybutylacrylate, polymethylmethacrylate-polyvinylidenedifluoride-blends, acrylnitrile/butadiene/styrene-copolymere (ABS), styrene/acrylnitrile-copolymere (SAN) and polyphenylenesulfone as well as mixtures thereof.

### Example 4 (application example laser welding of plastics)

The IR absorber according to Example 2 is incorporated by means of an injection molding machine into a polycarbonate sheet (thickness 2mm) at a concentration of 500ppm. The resulting transparent slightly bluish sheet is welded together with a polycarbonate sheet (thickness 1 mm) using a 250 watt Nd:YAG-laser. The surface was scanned by laser beam at a speed of 20mm/sec.

The resulting welding has an excellent connection, is highly transparent, does not show any localized plastic deformation, does not evolve bubbles during welding. No fracture of the welding seam is induced due to mechanical stress.

With state of the art IR absorbers for laser welding of plastics like Lumogen IR 765 or Lumogen IR 788 no welding takes place under these conditions. This is also true for diode lasers at e.g. 980 nm, 940 nm or 850 nm instead of a Nd:YAG laser (1064 nm). Only at 808 nm welding with these IR absorbers takes place.

In another embodiment the invention relates to the use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of NIR curing of adhesives and sealants and NIR drying of adhesives and sealants.

Preferred is the use of tungsten suboxides (e.g. WO_{2,72}), and tungsten bronzes (e.g. H_{0.53}WO₃ Na_{0.33}WO₃,_{,} Cs_{0.33}WO₃). Especially preferred are Cs_{0.2-0.5}WO₃.

The addition of an NIR absorbing additive to a liquid adhesive in particular water based adhesives but also solvent based adhesives can improve drying performance of the liquid adhesive by the concentrated absorption of the emitted NIR radiation.

The use of NIR radiation and NIR absorbing additive for drying liquid adhesives can be used in addition to conventional drying processes like hot air or IR radiation drying or as independent drying step.

The addition of the NIR absorbing additive to a liquid adhesive and subsequent irradiation with NIR under given constant conditions, result in a lower content of residual liquid (water) compared to the same adhesive without the NIR absorbing additive. This is especially interesting in web coating applications of liquid adhesives for example in the manufacture of label laminates or tapes. Further in web laminating processes of non porous materials like films or foils were the liquid adhesive needs to be completely dry before the lamination step. Also with porous substrates like paper or fabric, the complete adhesive drying before lamination gives advantages with regards to flatness of moisture or water sensitive substrates.

A further advantage is provided with the addition of NIR absorbing additives, that the induced energy is mainly absorbed within the adhesive layer itself which leads to lower substrate temperatures compared to conventional drying operations. This opens interesting possibilities to dry liquid adhesive coatings on temperature sensitive substrates like low melting or shrinkable films and fabrics.

### Example 5.1 (application example NIR curing of adhesives and sealants)

A water based acrylic pressure sensitive adhesives (PSA), Acronal V 212 from BASF Corp., with a solid content of 69% was diluted with water. The NIR absorbing additive according to Example 2 was, with the help of an acrylic copolymer dispersant EFKA 4585 from Ciba, mixed in a speed mixer. With a stainless steel coating bar a 50 micron adhesives layer was applied to a glass plate. The weight of the adhesive was determined before and after multiple passes under the NIR emitter.

The results indicate that the water based adhesive containing the NIR absorbing additive dries faster than the same adhesive without the additive.

| | **Experiment-Nr:** | **173/08 (no NIR additive)** | **174/08 (0.1% NIR additive)** | **175/08 (no NIR additive)** | **176/08 (0.1% NIR additive)** | **177/08 (no NIR additive)** | **178/08 (0.1% NIR additive)** |
|---|---|---|---|---|---|---|---|
| | | | | | | | |
| **NIR setting** | HB 6, Distance 100mm, Power (% | 30% | 30% | 30% | 30% | 50% | 50% |
| | Belt Speed (m/min) | 4 | 4 | 2 | 2 | 2 | 2 |
| | | | | | | | |
| **Adhesive Composition** | Acronal V 212 (69% solids) | 90 | 90 | 90 | 90 | 90 | 90 |
| | Water | 10 | 10 | 10 | 10 | 10 | 10 |
| | NIR-A | | 0.1 | | 0.1 | | 0.1 |
| | EFKA 4585 | | 0.2 | | 0.2 | | 0.2 |
| | | | | | | | |
| | Adhesive thickness wet (micron) | 100 | 100 | 100 | 100 | 100 | 100 |
| | | | | | | | |
| | Initial adhesive weight (g) | 0.4942 | 0.4510 | 0.4381 | 0.4372 | 0.3841 | 0.3920 |
| | Adhesive weiqht after 1 pass (g) | 0.4215 | 0.3697 | 0.3167 | 0.3020 | 0.2535 | 0.2541 |
| | Adhesive weiqht after 2 pass (g) | 0.3602 | 0.3080 | 0.2828 | 0.2817 | 0.2419 | 0.2452 |
| | Adhesive weiqht after 3 pass (g) | 0.3278 | 0.2917 | 0.2788 | 0.2779 | 0.2391 | 0.2424 |
| | Adhesive weiqht after 4 pass (g) | 0.3199 | 0.2877 | | | | |
| | | | | | | | |
| **Weight loos after irradiation** | Initial | 0.00% | 0.00% | 0.00% | 0.00% | 0.00% | 0.00% |
| | after 1 pass (%) | 14.71% | 18.03% | 27.71% | 30.92% | 34.00% | 35.18% |
| | after 2 passes (%) | 27.11 % | 31.71 % | 35.45% | 35.57% | 37.02% | 37.45% |
| | after 3 passes (%) | 33.67% | 35.32% | 36.36% | 36.44% | 37.75% | 38.16% |
| | after 4 passes (%) | 35.27% | 36.21% | | | | |

In a further embodiment NIR absorbing additives can be added to 100% solid, thermoplastic heat activated adhesive systems. Typically a heat activated adhesive layer is created by coating or extruding the corresponding adhesive system to one of the substrates to be bonded or to a suitable intermediate carrier. Alternatively a heat activated adhesive layer can be created by coating and drying a corresponding adhesive from an aqueous or solvent carrier. The so prepared adhesive layer may be sticky to the touch but is typically non-sticky and can be converted into smaller units e.g. slit rolls or sheets, for later activation and bonding to the second substrate. Heat activated adhesives can also be manufactured and provided as self supporting films (adhesive film), webs (web adhesive) or powders (powder adhesives). To establish a bond the so prepared heat activable adhesive layer or the self-supporting adhesive structure has to be heated above its activation temperature and then joined with the bonding substrate(s). Typical adhesive activation methods are: flame activation, hot air activation, IR activation, activation via heated rolls or a heat calendar heated plates, wedges or presses.

With the addition of NIR absorbing additives to heat activated adhesives the activation can conveniently be done with an NIR emitter. The suitably modified adhesive absorbs the NIR radiation; heats up above it required activation temperature and the bond can be established. As with the drying of liquid adhesives the addition of NIR absorbing additives brings the further advantage, that the energy is mainly absorbed by the adhesive and not the substrates and therefore also temperature sensitive materials are accessible to this bonding method. Typical chemistries for heat activated adhesives involve: polyolefines, amorphous alpha polyolefins, modified polyolefines like EVA, EAA, BAA, polypropylene, co-polyesters, copolyamides, thermoplastic polyurethanes, polycaprolactones, styrene-blockcopolymer based hotmelt adhesives

### Example 5.2 (application example NIR curing of adhesives and sealants)

A typical heat activated hotmelt adhesive based on amorphous poly-alpha-olefines (APAO) was mixed in a sigma blade kneader at 170°C for 1 hour. APAP polymers were obtained from Evonik Industries, hydrocarbon resin and styrene blockcopolymer from Exxon Chemical, Antioxidant from Ciba Inc. and the rosin ester tackyfier from Eastman. The adhesives were coated with a hot melt slot-die coater onto a siliconized paper and transferred to a steel plat carrier. The adhesive samples were exposed to the NIR radiation and the temperature of the adhesive surface was observed via laser thermometer.

The results show that the adhesive without NIR absorbing additive according to Example 2 only reaches the temperature as the blank steel carrier plate. Adding different amounts of NIR absorbing additive boosts the adhesive surface temperature to 99°C, 109°C and 162°C respectively.

| | **Experiment-Nr:** | **Carrier Plate** | **136/08 (no NIR additive)** | **137/08 (0.05% NIR additive)** | **138/08 (0.1% NIR additive)** | **139/08 (0.5% NIR additive)** |
|---|---|---|---|---|---|---|
| | | | | | | |
| **NIR setting** | HB 6, Distance 100mm, Power (%) | | 70% | 70% | 70% | 70% |
| | Belt Speed (m/min) | | 2 | 2 | 2 | 2 |
| | | | | | | |
| **Adhesive Composition** | Escorez 5310 (Hydrocarbon resin) | | 25 | 25 | 25 | 25 |
| | Vestoplast 408 (APAO) | | 20 | 20 | 20 | 20 |
| | Vestoplast 828 (APAO) | | 26 | 26 | 26 | 26 |
| | Iraanox 1010 (Antioxidant) | | 1 | 1 | 1 | 1 |
| | Vector 4111 (styrene Blockcopolymer) | | 10 | 10 | 10 | 10 |
| | Permalyn 6110 (Rosinester tackyfier) | | 18 | 18 | 18 | 18 |
| | NIR-A | | | 0.5 | 0.1 | 0.1 |
| | | | | | | |
| | | | | | | |
| | Adhesive thickness (g/m2) | 0 | 96 | 94 | 95 | 95 |
| | | | | | | |
| | Temperature after irradiation (°C) | 76 | 78 | 99 | 109 | 162 |

In another embodiment the invention relates to the use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0≤z/y≤3.0, to increase the heat-input amount of near infrared radiation and the efficiency in the process of laser marking of paper

Preferred is the use of tungsten suboxides (e.g. WO_{2,72}), and tungsten bronzes (e.g. H_{0.53}WO₃ Na_{0.33}WO₃, Cs_{0.33}WO₃). Especially preferred are Cs_{0.2-0.5}WO₃.

### Example 6 (application example laser marking of paper)

A colourless ink formulation composed of 45 parts of Tioxide AH-R (Anatase), 54.9 parts of an acrylic varnish (prepared by mixing together 20 parts Vinnapas C501 resin from Wacker, a solid copolymer of vinyl acetate and crotonic acid, and 80 parts propylacetate) and 0.1 parts of the material from example 2 is applied to clay coated paper using a bar coater. Laser marking with a Nd:YAG laser at various powers (14-25A, 20 kHz, 1500 mms, 4.2-7.6 W) gives excellent marking results with high contrast.

### Example 7 (comparative example laser marking of paper)

Using lanthanum hexaboride instead of the material from example 2 requires more than 10 times as much of the IR-absorber (1.4 parts LaB6) in order to get the same laser marking performance.

In another embodiment the invention relates to the use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of drying of printings or fixing of ink toners to a substrate.

Preferred is the use of tungsten suboxides (e.g. WO_{2,72}), and tungsten bronzes (e.g. H_{0.53}WO₃ Na_{0.33}WO₃, Cs_{0.33}WO₃). Especially preferred are Cs_{0.2-0.5}WO₃.

In another embodiment the invention relates to the use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of heating of plastic preforms.

Preferred is the use of tungsten suboxides (e.g. WO_{2,72}), and tungsten bronzes (e.g. H_{0.53}WO₃ Na_{0.33}WO₃ Cs_{0.33}WO₃). Especially preferred are Cs_{0.2-0.5}WO₃.

In a further embodiment the invention relates to the use of a blend comprising tungsten oxide and/or tungstate as defined above and in addition a dithiolene metal complex of the formula I or II as disclosed in the International publication WO2008/086931 to increase the heat-input amount of near infrared radiation. 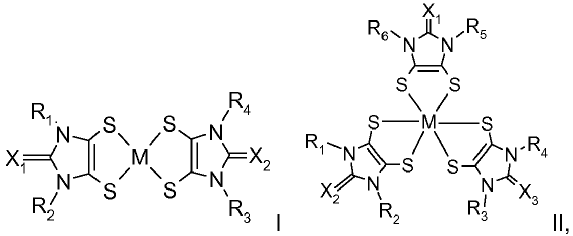 wherein
**M** Ni, Pd, Pt, Au, Ir, Fe, Zn, W, Cu, Mo, In, Mn, Co, Mg, V, Cr and Ti ,
**X₁, X₂** and **X₃** idependently of one another are sulfur or oxygen;
**R₁, R₂, R₃, R₄, R₅** and **R₆** idependently of one another are hydrogen, **NR₇R₈,** C₁-C₁₈alkyl, aryl, aralkyl, heteroarylalkyl, wherein **R₇** and **R₈** idependently of one another are C₁-C₁₈alkyl, aryl, aralkyl, heteroarylalkyl.

Examples for C₁-C₁₈alkyl are propyl, isopropyl, n-butyl, sec. butyl, tert. butyl, n-hexyl, cyclopentyl, cyclohexyl.

Aryl is phenyl, naphyl, anthryl or phenantryl. Arylalkyl ist e.g. benzyl. Heteroarylalkyl is understood as heteroaryl groups connected, as substituents, via a lower alkylene to a heteroaromatic ring selected from imidazolyl, pyridyl, thienyl, furyl, thiazolyl, indolyl, chinolinyl, pyrazolyl, pyrazyl, pyridazyl, pyrimidinyl.

A specific example is

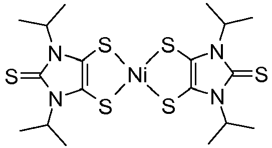

The amount of dithiolen metal complex to tungsten oxide is in the range of 5 to 90 wt%

In a further embodiment the invention relates to the use of a blend comprising tungsten oxide and/or tungstate as defined above and in addition at least one organic IR absorber selected from quinone-diimmonium salt, aminium salt, polymethines such as cyanine squaraine, croconaine; phthalocyanine, naphthalocyanine and quaterrylene-bisimide or in addition at least one anorganic IR absorber selected from lanthanum hexaboride, indium tin oxide (ITO) antimony tin oxide such as Minatec 230 A-IR available from Merck, or Lazerflair® pigments available from Merck.

## Claims

1. The use of tungsten oxide of the formula **WO3-x** wherein W is tungsten, O is oxygen, and x is 0.1-1 and/or the use of tungstate of the formula **MxWyOz** wherein M is one or more element selected from NH4, H, Li, Na, K, Rb, Cs, Ca, Ba, Sr, Fe, Sn, Mo, Nb, Ta, Ni, Pd, Pt, Cu, Ag, Au, Zn, Cd, Al, Ga, In, TI; W is tungsten, O is oxygen, 0.001≤x/y≤1, and 2.0<z/y≤3.0, to increase the heat-input amount of near infrared radiation in the process of NIR curing of adhesives and sealants and NIR drying of adhesives and sealants.

2. The use according to claim 1, wherein tungsten suboxides WO_{2,72} and tungsten bronzes selected from H_{0.3-0.7}WO₃ Na_{0.2-0.5}WO₃, Cs_{0.2-0.5}WO₃ are used.

3. The use according to claim 1 wherein Cs_{0.2-0.5}WO₃ is used.

4. The use according to claim 1 of a blend comprising tungsten oxide and/or tungstate according to claim 1 and in addition a dithiolene metal complex of the formula I or II 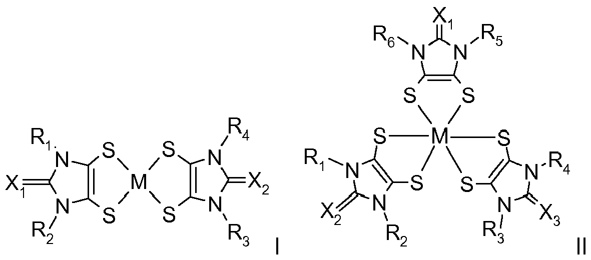 wherein
**M** Ni, Pd, Pt, Au, Ir, Fe, Zn, W, Cu, Mo, In, Mn, Co, Mg, V, Cr and Ti , **X₁, X₂** and **X₃** idependently of one another are sulfur or oxygen;
**R₁, R₂, R₃, R₄, R₅** and **R₆** idependently of one another are hydrogen, **NR₇R₈,** C₁-C₁₈alkyl, aryl, aralkyl, heteroarylalkyl, wherein **R₇** and **R₈** idependently of one another are C₁-C₁₈alkyl, aryl, aralkyl, heteroarylalkyl.

5. The use according to claim 1 of a blend comprising tungsten oxide and/or tungstate according to claim 1 and in addition at least one organic IR absorber selected from quinone-diimmonium salt, aminium salt, polymethines phthalocyanine, naphthalocyanine and quaterrylene-bisimide or in addition at least one anorganic IR absorber selected from lanthanum hexaboride, indium tin oxide (ITO) antimony tin oxide or pigments.
